# FASCICULE DE BREVET EUROPEEN

(11) **EP 0 759 320 B1**
(45) Date de publication et mention de la délivrance du brevet: **19.12.2001**
(21) Numéro de dépôt: 96401788.3
(22) Date de dépôt: 14.08.1996
(51) Int. Cl.: B01D 53/04

(54) **Appareil de séparation de gaz par adsorption**
Vorrichtung zur Gastrennung mittels Adsorption
Apparatus for separating gas by adsorption

(30) Priorité: 21.08.1995 FR 9509945
(43) Date de publication de la demande: 26.02.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Andreani, Philippe, 94270 Le Kremlin Bicetre (FR); Monereau, Christian, 75011 Paris (FR)
(74) Mandataire: Le Moenner, Gabriel

(56) Documents cités:
- EP-A- 0 118 349
- EP-A- 0 526 343
- US-A- 4 838 901

## Description

La présente invention concerne les appareils de séparation de gaz par adsorption du type PSA - ou VSA (Pressure/Vacuum Swing Adsorption) - comprenant, dans une enveloppe, au moins un secteur vertical d'au moins un adsorbant, et des moyens de circulation de gaz pour amener, faire transiter sensiblement horizontalement à travers l'adsorbant et évacuer un flux gazeux dans et hors de l'enveloppe.

Ce type d'appareils de séparation, traitant des forts débits de gaz avec des séquences de cycles rapides, posent des problèmes de circulation et de distribution des gaz, encore accrus dans les appareils avec un transit horizontal de flux gazeux au travers de l'adsorbant, comme c'est le cas ici.

La présente invention a pour objet de proposer de nouveaux agencements d'appareils de séparation de gaz par adsorption permettant d'obtenir une distribution gazeuse améliorée dans un agencement global compact et de faibles coûts de fabrication, avec une consommation énergétique minimale.

Pour ce faire, l'invention propose un appareil selon la revendication 1.

Selon d'autres caractéristiques de l'invention :
- le rapport de la section globale des passages à la section d'entrée/sortie du deuxième sous-volume est typiquement supérieur à 0,5;
- les premier et second sous-volumes ont sensiblement la même extension axiale;
- le rapport du volume du premier sous-volume au volume au second sous-volume est typiquement supérieur à 0,25 ;
- les moyens de circulation comprennent des tronçons d'amenée et d'évacuation verticaux;
- l'adsorbant est annulaire ;
- les tronçons d'amenée et d'évacuation se raccordent, d'un même côté axial de l'enveloppe, à des circuits de gaz.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une vue schématique en coupe verticale d'un appareil selon l'invention ; et
- la figure 2 est une vue en coupe verticale d'un mode de réalisation particulier d'un appareil selon l'invention.

Dans la description qui va suivre et sur les dessins, les éléments identiques ou analogues portent les mêmes chiffres de référence.

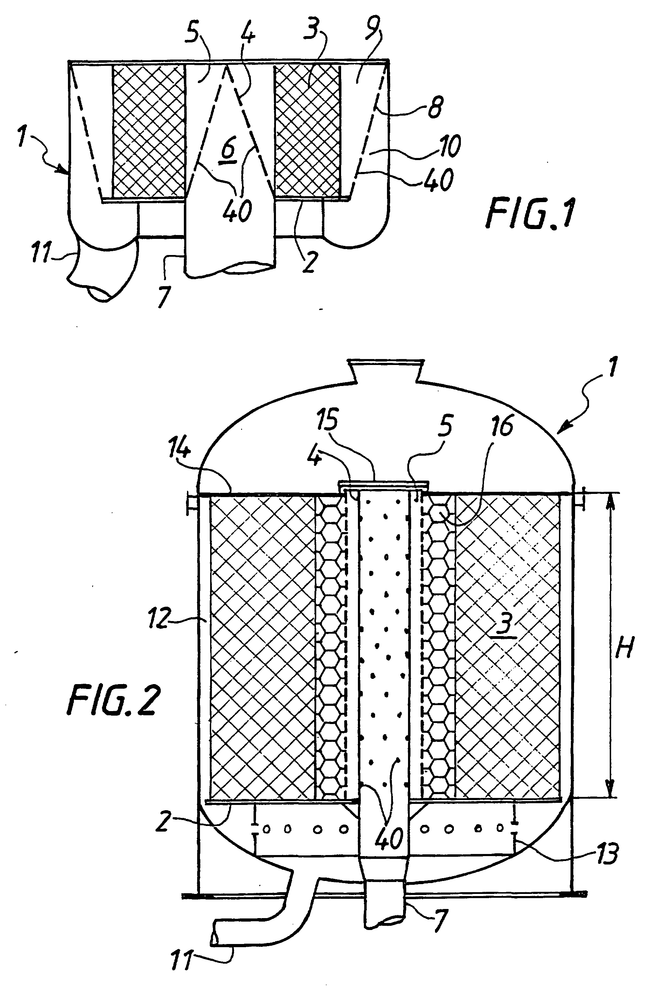

Dans le mode de réalisation représenté sur la figure 1, dans une enveloppe à géométrie de révolution, généralement désignée par la référence 1, est disposé, sur un fond annulaire 2, un volume annulaire d'adsorbant 3 délimité intérieurement et extérieurement par des grilles concentriques. Le volume intérieur à l'adsorbant 3 est divisé, par une surface perforée 4, ici de géométrique conique formée avec un motif de perforations 40 angulairement et axialement réparties, en un premier sous-volume 5 adjacent à l'adsorbeur et un deuxième sous-volume 6 communiquant avec une tubulure centrale 7 destinée à introduire un mélange gazeux à séparer dans l'adsorbant 3. Dans le mode de réalisation de la figure 1, l'espace annulaire entre la virole périphérique de l'enveloppe 1 et la périphérie de l'adsorbant 3 est, de façon similaire, divisé par une surface perforée 8, ici également de forme conique en un premier sous-volume 9 adjacent à l'adsorbant et un deuxième sous-volume 10 communiquant, via un passage annulaire, entre la périphérie du fond 2 et la virole périphérique de l'enveloppe, avec une chambre inférieure formée dans cette dernière et communiquant avec une tubulure 11 d'échappement du gaz non retenu par l'adsorbant 3 et donc séparé du mélange gazeux introduit par la tubulure 7.

Selon l'invention, le rapport du volume 5 au volume 6 (ou du volume 9 au volume 10) est inférieur à 4 de préférence compris entre 0,4 et 1,5. Selon l'invention également, le rapport de la surface totale des perforations 40 à la section de la tubulure d'entrée 7 est inférieur à 5, de préférence compris entre 1 et 2,5 (il en est de même pour le rapport des sections des perforations 40 de la paroi 8 à la section d'entrée annulaire du volume 10).

Avec cet agencement, les perforations assurent avec une très faible perte de charge, donc sans perte énergétique, une distribution primaire de telle sorte que les écarts de débits locaux alimentant le sous-volume seront typiquement inférieurs à 30 %. Ces variations peuvent être réduites à 15 %, voire moins, en réalisant des perforations variables et/ou. en optimisant la géométrie de la surface perforée et/ou en augmentant la perte de charge à travers au moins une partie de ces perforations au prix d'un léger surcoût énergétique.

Le sous-volume aval (5 ou 9 selon les sens de circulations des gaz) assure alors le rééquilibrage final des débits locaux grâce à la perte de charge aval dans le lit d'adsorbant, ainsi que la diffusion des jets issus des perforations pour éviter des variations de pression locales dues à l'énergie cinétique des jets au niveau de la grille de contention d'adsorbant.

Avec un tel agencement, le débit longitudinal, qui assure le rééquilibrage quasi-parfait des pressions dans le sens axial du système, est faible par rapport au débit d'alimentation, ce qui permet d'utiliser des couronnes de dimensions réduites et donc de réaliser un appareil de configuration compact.

Dans le mode de réalisation de la figure 2, on retrouve le distributeur central qui vient d'être décrit, constitué ici d'un tube droit perforé 4 prolongeant la tubulure d'amenée axiale 7. L'appareil représenté est, ici, dépourvu de distributeur extérieur, seule une mince chambre annulaire 12 étant ménagée entre la virole périphérique de l'enceinte 1 et la périphérie de l'adsorbant annulaire 3. Dans ce mode de réalisation, l'enveloppe 1 comprend des fonds bombés supérieur et inférieur, ce dernier délimitant, avec le fond 2, une chambre inférieure annulaire coaxiale aux tubes 7 et 4 comportant une cloison annulaire 13 pourvue d'ouvertures angulairement réparties pour homogénéiser l'écoulement de et vers la tubulure 11. Le dôme supérieur comprend une cheminée centrale permettant le chargement de l'adsorbant, ce dernier étant plaqué axialement par une membrane étanche 14 fixée entre la virole de l'enveloppe et un flasque central 15 d'obturation du tube 4 et plaquée sous pression, par exemple par un gaz sous pression introduit dans le dôme supérieur, pour éviter tout risque de bi-passe de la masse d'adsorbant 3 entre les chambres 5 et 12.

Dans le mode de réalisation représenté, pour assurer une meilleure diffusion des jets issus des perforations 40 du tube central 4 avant qu'il n'atteigne la masse d'adsorbant 3, on prévoira, entre cette dernière et le sous-volume 5, une couronne 16 d'éléments de garnissages métalliques, de billes céramique ou avantageusement, lorsque le mélange gazeux à séparer contient de la vapeur d'eau, des billes d'alumine qui participeront à la rétention de la vapeur d'eau.

A titre de comparaison, un appareil selon le mode de réalisation de la figure 2, avec une hauteur d'adsorbant H de 5 m, un diamètre externe d'adsorbant de 1,54 m, un diamètre interne d'adsorbant de 40 cm, un tube perforé 4 de 30 cm de diamètre ayant un taux de perforations de 2,4 % soit une surface totale de perforations d'environ 1,6 fois la section du tube 4, on obtient, avec un rapport premier sous-volume (5)/deuxième sous-volume (6) de 0,78, la même qualité de distribution et les mêmes performances qu'avec un adsorbant annulaire de diamètre externe 1,74 et un simple passage d'amenée central de diamètre 90 cm, pour un même volume global d'adsorbant d'environ 8,65 m³. On notera la compacité et la réduction des volumes morts autorisées par l'agencement selon l'invention par opposition aux solutions, inacceptables pour des questions de dimensionnements et de coûts, qui viseraient à installer des volumes de distribution de grandes sections pour rendre négligeables les variations de pression dues aux pertes de charge par friction et aux variations de l'énergie cinétique des gaz ou créant des pertes de charge importantes, du type distributeur à matériaux poreux.

## Revendications

1. Appareil de séparation de gaz par adsorption de type PSA, comprenant, dans une enveloppe (1), au moins un secteur vertical d'au moins un adsorbant (3), et des moyens de circulation de gaz pour amener, faire transiter horizontalement à travers l'adsorbant, et évacuer un flux gazeux, **caractérisé en ce que** les moyens de circulation comprennent, sur au moins un côté vertical de l'adsorbant (3), un volume libre de distribution de gaz divisé en un premier sous-volume (5 ; 9) adjacent à l'adsorbant et un deuxième sous-volume (6 ; 10) séparé du premier sous-volume par une paroi (4 ; 8) munie de passages (40) assurant une distribution primaire du gaz entre les premier (5 ; 9) et deuxième (6 ; 10) sous-volumes le rapport de la section globale des passages (40) à la section d'entrée/sortie du deuxième sous-volume (6 ; 10) n'excèdant pas 5 et le rapport du volume du premier sous-volume au volume du second sous-volume n'excèdant pas 4, les passages (40) assurant ainsi avec une très faible perte de charge ladite distribution primaire, de sorte que les variations de débits locaux de gaz dans le premier sons-volume suivant la verticale dudit côté de l'adsorbant sont réduites.

2. Appareil selon la revendication 1, **caractérisé en ce que** les premier (5 ; 9) et second (6 ; 10) sous-volumes ont sensiblement la même extension axiale.

3. Appareil selon l'une des revendications précédentes, **caractérisé en ce que** les moyens de circulation comprennent des tronçons d'amenée et d'évacuation verticaux.

4. Appareil selon la revendication 3, **caractérisé en ce que** l'adsorbant (3) est annulaire.

5. Appareil selon la revendication 3 ou la revendication 4, **caractérisé en ce que** les tronçons d'amenée et d'évacuation se raccordent, d'un même côté axial de l'enveloppe, à des circuits de gaz (7; 11).

6. Appareil selon l'une des revendications 4 ou 5 à 7, **caractérisé en ce que** la paroi munie de passages est constituée d'un tube (4) disposé coaxialement dans l'adsorbant (3) et muni de perforations (40) angulairement et axialement distribuées.

7. Appareil selon la revendication 6, **caractérisé en ce qu'**il comprend une couche annulaire (16) de matériaux divisés disposés radialement à l'intérieur de l'adsorbant (3).

8. Appareil selon la revendication 7, **caractérisé en ce que** les matériaux divisés (16) comprennent des billes d'alumine.

9. Appareil selon l'une des revendications 5 à 8, **caractérisé en ce que** l'enveloppe comprend une virole latérale et un fond et inclut une cloison transversale (2) supportant l'adsorbant (3) et définissant, avec le fond, une chambre inférieure communiquant avec un espace annulaire (12) entre la virole et la périphérie de l'adsorbant (3).

10. Appareil selon l'une des revendications 5 à 9, **caractérisé en ce qu'**il comporte une membrane (14) pressée sur la partie supérieure de l'adsorbant (3).

11. Application d'un appareil selon l'une des revendications précédentes à la séparation de gaz de l'air.

## Patentansprüche

1. Vorrichtung zur Gastrennung mittels Adsorption des Typs PSA, umfassend in einem Gehäuse (1) wenigstens einen Sektor mit wenigstens einem Adsorptionsmittel (3) und Hilfsmitteln zur Zirkulation des Gases, um einen Gasfluss zuzuführen, horizontal durch das Adsorptionsmittel zu leiten und abzuführen, **dadurch gekennzeichnet, dass** die Hilfsmittel zur Zirkulation auf wenigstens einer vertikalen Seite des Adsorptionsmittels (3) ein freies Volumen zur Verteilung des Gases umfassen, wobei das Volumen unterteilt ist in ein erstes Untervolumen (5; 9) in der Nähe des Adsorptionsmittels und in ein zweites Untervolumen (6; 10), das von dem ersten Untervolumen durch eine Wand (4; 8) getrennt ist, die mit Durchlässen (40) versehen ist, welche eine primäre Verteilung des Gases zwischen dem ersten (5; 9) und dem zweiten (6; 10) Untervolumen sicherstellt, wobei das Verhältnis des gesamten Querschnitts der Durchlässe (40) zu dem Eingangs-/Ausgangsquerschnitt des zweiten Untervolumens (6; 10) den Faktor 5 nicht überschreitet und das Verhältnis des Rauminhalts des ersten Untervolumens zu dem Rauminhalt des zweiten Untervolumens den Faktor 4 nicht überschreitet und die Durchlässe (40) auf diese Weise die besagte primäre Verteilung mit einem sehr geringen Verlust so sicherstellen, dass die Schwankungen in der örtlichen Durchflussrate des Gases in dem ersten Untervolumen an der besagten vertikalen Seite des Adsorptionsmittels reduziert werden.

2. Vorrichtung nach Anspruch 1, **dadurch gekennzeichnet, dass** das erste Untervolumen (5; 9) und das zweite Untervolumen (6; 10) im Wesentlichen die gleiche axiale Ausdehnung haben

3. Vorrichtung nach einem der vorherigen Ansprüche, **dadurch gekennzeichnet, dass** die Hilfsmittel zur Zirkulation senkrechte Teilstücke für die Zuführung und Abführung umfassen.

4. Vorrichtung nach Anspruch 3, **dadurch gekennzeichnet, dass** das Adsorptionsmittel (3) ringförmig ist.

5. Vorrichtung nach Anspruch 3 oder 4, **dadurch gekennzeichnet, dass** die Teilstücke für die Zuführung und Abführung auf einer gleichen axialen Seite des Gehäuses mit den Gasleitungen (7; 11) verbunden sind.

6. Vorrichtung nach einem der Ansprüche 4 oder 5, **dadurch gekennzeichnet, dass** die mit Durchlässen versehene Wand aus einem Rohr (4) besteht, das koaxial in dem Adsorptionsmittel (3) angeordnet und mit Bohrungen (40) versehen ist, die winklig und axial verteilt sind.

7. Vorrichtung nach Anspruch 6, **dadurch gekennzeichnet, dass** sie eine ringförmige Schicht (16) aus getrennten Materialien umfasst, die radial im Inneren des Adsorptionsmittels (3) angeordnet sind.

8. Vorrichtung nach Anspruch 7, **dadurch gekennzeichnet, dass** die getrennten Materialien (16) Aluminiumkugeln umfassen.

9. Vorrichtung nach einem der Ansprüche 5 bis 8, **dadurch gekennzeichnet, dass** das Gehäuse einen seitlichen Mantelring und einen Boden umfasst und eine schräg verlaufende Zwischenwand (2) enthält, die das Adsorptionsmittel (3) stützt und mit dem Boden eine untere Kammer bildet, welche mit einem ringförmigen Raum (12) zwischen dem Mantelring und der Außenseite des Adsorptionsmittels (3) kommuniziert.

10. Vorrichtung nach einem der Ansprüche 5 bis 9, **dadurch gekennzeichnet, dass** sie eine Membrane (14) umfasst, die auf den oberen Teil des Adsorptionsmittels (3) gedrückt wird.

11. Einsatz einer Vorrichtung nach einem der vorherigen Ansprüche für die Trennung von Gas aus der Luft.

## Claims

1. Apparatus for separating gases by PSA-type adsorption, comprising, in a casing (1), at least one vertical sector of at least one adsorbent (3) and gas circulation means for feeding, transferring, horizontally through the adsorbent, and discharging a gas stream, **characterized in that** the circulation means comprise, on at least one vertical side of the adsorbent (3), a free gas distribution volume divided into a first subvolume (5; 9) adjacent to the adsorbent and a second subvolume (6; 10) separated from the first subvolume by a wall (4; 8) provided with passages (40) ensuring primary distribution of the gas between the first subvolume (5; 9) and the second subvolume(6; 10), the ratio of the overall cross section of the passages (40) to the inlet/outlet cross section of the second subvolume (6; 10) not exceeding 5 and the ratio of the volume of the first subvolume to the volume of the second subvolume not exceeding 4, the passages (40) thus ensuring the said primary distribution with a very low pressure drop, so that the variations in local gas flow rates in the first subvolume along the vertical of the said side of the adsorbent are reduced.

2. Apparatus according to Claim 1, **characterized in that** the first subvolume (5; 9) and the second subvolume (6; 10) have substantially the same axial extent.

3. Apparatus according to either of the preceding claims, **characterized in that** the circulation means comprise vertical feed and discharge segments.

4. Apparatus according to Claim 3, **characterized in that** the adsorbent (3) is annular.

5. Apparatus according to Claim 3 or Claim 4, **characterized in that** the feed and discharge segments are connected, on the same axial side of the casing, to gas circuits (7; 11).

6. Apparatus according to either of Claims 4 and 5, **characterized in that** the wall provided with passages consists of a tube (4) placed coaxially in the adsorbent (3) and provided with angularly and axially distributed perforations (40).

7. Apparatus according to Claim 6, **characterized in that** it comprises an annular layer (16) of divided materials which are placed radially inside the adsorbent (3).

8. Apparatus according to Claim 7, **characterized in that** the divided materials (16) comprise alumina beads.

9. Apparatus according to one of Claims 5 to 8, **characterized in that** the casing comprises a lateral shell and a bottom and includes a transverse partition (2) supporting the adsorbent (3) and defining, with the bottom, a lower chamber communicating with an annular space (12) between the shell and the periphery of the adsorbent (3).

10. Apparatus according to one of Claims 5 to 9, **characterized in that** it includes a membrane (14) pressed against the upper part of the adsorbent (3).

11. Application of an apparatus according to one of the preceding claims to the separation of gases from air.
